# EUROPEAN PATENT SPECIFICATION

(11) **EP 3 932 197 B1**
(45) Date of publication and mention of the grant of the patent: **04.09.2024**
(21) Application number: 21181837.2
(22) Date of filing: 25.06.2021
(51) Int. Cl.: A01L 7/10

(54) **HORSESHOE NAIL AND METHOD FOR MANUFACTURING SUCH HORSESHOE NAIL**
HUFEISENNAGEL UND VERFAHREN ZUR HERSTELLUNG EINES SOLCHEN HUFEISENNAGELS
CLOU DE FER À CHEVAL ET PROCÉDÉ DE FABRICATION D'UN TEL CLOU DE FER À CHEVAL

(30) Priority: 02.07.2020 NL 2025980
(43) Date of publication of application: 05.01.2022
(73) Proprietor: Kerckhaert Hoefijzerfabriek B.V., 4581 Vogelwaarde (NL)
(72) Inventor: KERCKHAERT, Michiel Petrus Maria, 9180 Moerbeke (BE)
(74) Representative: Donné, Eddy

(56) References cited:
- GB-A- 191 116 261
- GB-A- 622 143
- NL-A- 2 016 414

## Description

The present invention relates to a hardened horseshoe nail for nailing a horseshoe under a hoof of a hoofed animal.

It is already known that horseshoe nails are used for nailing a horseshoe under a horse's hoof.

Typically, horseshoes have a curved form with two branches ending in a free end at the back and which are provided with grooves with nail holes in the bottom through which the farrier drives nails into the horse's hoof in the known way.

Traditionally, a horseshoe nail has a shank with a tip at one end and a broadened head at the other end, whereby the heads of the horseshoe nails are partly hidden in the grooves and partly protruding from underneath the horseshoe when the hoof has just been shod.

GB 191116261 A discloses a horseshoe nail for nailing a horseshoe to a hoof, wherein the horseshoe nail is made from steel, whereby the horseshoe nail contains a shank with a tip at one end and a widened head at the other end and whereby the head is at least hardened over a part of its length from its free end.

Furthermore, it is generally known that horseshoe nails are made from steel such as for example steel CH1T or steel 1010A or steel Q235.

A disadvantage of horseshoe nails made from said type of steel is that due to their low carbon content, they are relatively soft, which means that the heads of horseshoe nails wear off relatively quickly and the horseshoe nails can suddenly break off.

Additionally, said protruding section of said heads wears off quite quickly when walking, after just a few days already, and then the wear occurs on the underside of the horseshoe that is in contact with the ground.

Particularly in the case of race horses, which are shod with aluminium horseshoes, the horseshoes consequently need to be replaced in the relatively short term, which obviously results in extra costs.

The purpose of the present invention is to provide a solution to the aforementioned and other disadvantages.

To this end the invention aims at a method for making a horseshoe nail as defined in claims 7 and 8, as well as a hardened horseshoe nail for nailing a horseshoe to a hoof, as defined in claims 1 to whereby the horseshoe nail is made from steel with a carbon weight percentage between 0.18 and 0.25, whereby the horseshoe nail contains a shank with a tip at one end and a widened head at the other end and whereby the head is at least hardened over a part of its length from its free end, whereas the shank is not hardened over its entire or almost entire length from the tip.

Thanks to the choice of a type of steel with a carbon weight percentage of 0.18 to 0.25 the horseshoe nail is flexible enough to prevent fractures during shedding and/or during walking, whereas the head can be sufficiently hardened to increase the wear resistance, which when walking provides the advantage that therefore the heads wear off less quickly and the horseshoe is consequently protected from wear for longer and needs to be replaced less often and fewer visits to the farrier are needed.

Additionally, the heads with their protruding section give a certain advantage of grip when walking, such that this advantage is also maintained for a longer period when the heads wear off less quickly. This is advantageous during horse races and in preventing falls resulting in possible injury to the horse and the jockey.

Preferably the head of the horseshoe nail is hardened to a Rockwell scale C (HRC) of 30 or more, preferably 40 or more.

The head of the horseshoe nail is locally hardened by means of heating, preferably but not exclusively with induction, after which the horseshoe nail is quenched in a liquid such as water, such that the steel is converted into martensite.

An advantage of local heating by means of induction is that this is a well known technique that can be applied very locally without the rest of the horseshoe nail being heated, such that more specifically the shank and the tip retain the desired properties of the originally chosen type of steel.

In a preferred embodiment the head of the horseshoe nail is made from carbon steel grade 1022 "American Iron and Steel Institute" with a hardness of 98 for example. Hardness Rockwell B (HRB), hardened to a length of for example 1.9 mm to 3.9 mm lengthways along the free end of the head whereby the mechanical properties of this steel change such that the hardness increases to 30 hardness Rockwell C or more.

The head and the shank of the horseshoe nail are both rectangular according to their cross-section, whereby their width direction corresponds with the longest side of the rectangle.

The invention further relates to a horseshoe in combination with one or more hardened horseshoe nails according to the invention, whereby the horseshoe is provided with one or more grooves with one or more nail holes for one horseshoe nail each, and whereby in a mounted condition the head of the horseshoe nail is partly sunk in the groove and protrudes with its hardened end from the groove.

An advantage of the protruding and hardened end of the head from the groove of the horseshoe is that a horse consequently has more grip when stepping, walking and running, which also increases the horse's safety.

The invention also relates to a method for manufacturing a horseshoe nail with a hardened head according to any one of the claims 1 to 4, said method comprising the following steps:
- providing a horseshoe nail made of steel with a carbon weight percentage between 0.18 and 0.25;
- locally heating the section of the head of a horseshoe nail to be hardened;
- quenching the head in water or another fluid.

With the intention of better showing the characteristics of the invention, a preferred embodiment of a horseshoe nail and a method for manufacturing such horseshoe nail according to the invention is described hereinafter, by way of an example without any limiting nature, with reference to the accompanying drawings wherein:
figure 1 schematically shows a front view of a horseshoe nail according to the invention;
figure 2 shows a classic horseshoe with only a section of the horseshoe nails;
figure 3 shows a cross-section according to line III-III in figure 2.

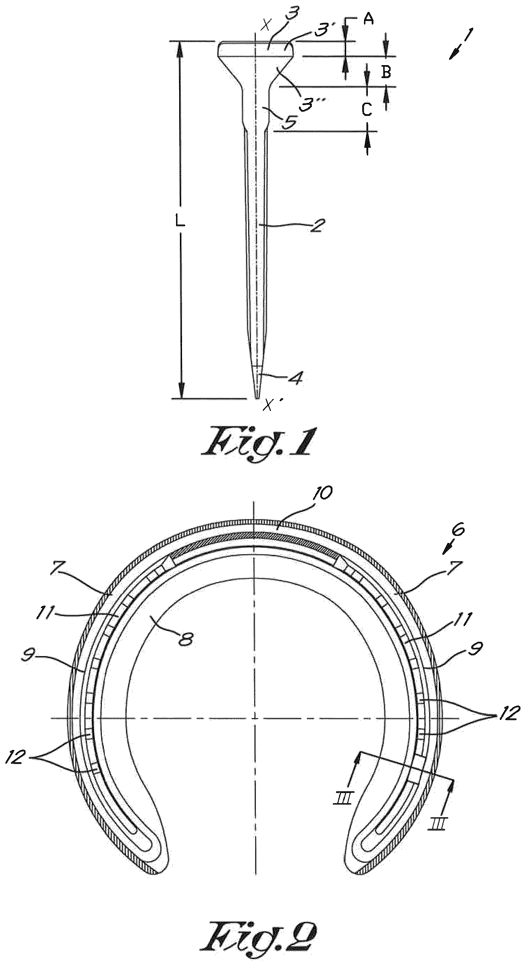

The horseshoe nail 1 shown in figure 1 according to its longitudinal direction X-X' contains a shank 2 with a head 3 at one end and a tip 4 at the other end.

The head 3, from its free end towards the tip 4 of the horseshoe nail 1, first has a section 3' over length A that is wideningly tapered and subsequently a section 3" that is narrowingly tapered over a length B up to a straight section 5 of the shank with length C.

Figure 2 shows an example of a horseshoe 6 which is made from aluminium or another material such as steel or iron and which has a curved form with two branches 7 on the side and in the underside 8 which is intended for making contact with the ground and is provided with two grooves 9 on either side of the toe section 10 of the horseshoe 6 with nail holes 12 in the base 11 for nailing the horseshoe against the underside of the hoof, whereby in figure 2 only one horseshoe nail 1 is shown by way of example.

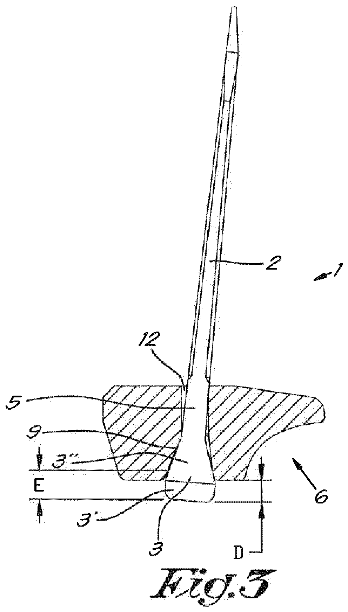

How the horseshoe nail 1 is mounted through the nail hole 12 is apparent from the cross-section of figure 3 which shows that the grooves 9 are narrowingly tapered from the underside 8 toward the base 11, such that the horseshoe nail 1 fits in the groove 9 with the conical section 3" of the head 3 and the straight section 5 fits in the nail hole 12.

As shown, the head 3 of the horseshoe nail 1 protrudes with a certain length D along the underside 8 from the horseshoe 6.

Preferably, the horseshoe nail 1 is made of carbon steel with a hardness of 98 HRB determined by the carbon content in the steel.

According to the invention, the head 3 of the horseshoe nail 1 is locally hardened over a certain length E from the free end of the head 3 of the horseshoe nail 1 which preferably is at least equal to the length D of the section of the head 3 of the horseshoe nail 1 protruding from the horseshoe 6.

The length E to where the head 3 is hardened, measured from the free end of the head 3, amounts to preferably 1.9 mm to 3.9 mm.

For hardening the head 3 of the horseshoe nail 1, the end of the head 3 is locally heated for example using induction, after which the horseshoe nail 1 is quenched in a cold fluid such as for example water.

When walking the heads 3 of the horseshoe nails 1 provide a better grip in the ground.

Because the heads 3 are hardened, they will wear off less quickly when walking and the horseshoe 6 made from aluminium or iron or another type of material is protected from wear for longer.

Preferably, the horseshoe nail 1 on the level of the shank 2 in cross-section is rectangular, whereby both the width direction of the head and the shank correspond with the longest side of the rectangle. Preferably, the head 3 of the hoof nail 1 is enlarged in a lateral direction according to the width direction B of the head.

In the example of figure 3, the head 3 of the horseshoe nail 1 is rectangular from an axial direction, whereby in this case the head 3 of the horseshoe nail 1 extends with its long rectangle side parallel to the longitudinal direction of the groove 9.

The downward protruding section of the head 3 of the horseshoe nail 1 is locally hardened and therefore longer resistant to wear, which also protects the tread of the horseshoe 6 from wear when walking.

Alternatively, horseshoe nails 1 also exist with a square head which according to the invention can then also be hardened up to a certain length.

The present invention is by no means limited to the embodiments described as an example and shown in the figures, however, such method and a horseshoe nail can be realised according to different variants, without departing from the scope of the invention, as defined in the appended claims.

## Claims

1. Horseshoe nail (1) for nailing a horseshoe (6) to a hoof, wherein the horseshoe nail (1) contains a shank (2) with a tip at one end (4) and a widened head (3) at the other end and whereby the head (3) is at least hardened over a part of its length (E) from its free end, whereas the shank (2) is not hardened over its entire or almost entire length from the tip (4), **characterized in that** the horseshoe nail (1) is made from steel with a carbon weight percentage between 0.18 and 0.25.

2. Horseshoe nail (1) according to claim 1, **characterised in that** only the head (3) is hardened up to a length (E) from 1.9 mm to 3.9 mm from its free end.

3. Horseshoe nail (1) according to any one of the previous claims, **characterised in that** the hardened section of the head (3) has a Rockwell scale C hardness of 30 or more, preferably 40 or more.

4. Horseshoe nail (1) according to claim 3, **characterised in that** the cross-section of both the head (3) and the shank (2) of the horseshoe nail (1) is rectangular, whereby the longest sides of both cross-sections are parallel with each other.

5. Combination of horseshoe (6) and horseshoe nail (1), whereby the horseshoe (6) is provided with one or more grooves (9) with one or more nail holes (12) in the base (11), whereby in a mounted condition of the horseshoe (6) under a hoof, the nail (1) is partly sunken with its head (3) in the groove (9) with an end protruding from the groove (9), **characterised in that** the horseshoe nail (1) is a horseshoe nail (1) according to any one of the previous claims of which at least the protruding section of the head (3) is hardened.

6. Combination according to claim 5, **characterised in that** only the protruding section of the head (3) is hardened.

7. Method for making a horseshoe nail (1) with a hardened head (3) according to any one of the claims 1 to 4, wherein the method comprises the following steps:
- providing a horseshoe nail (1) made of steel with a carbon weight percentage between 0.18 and 0.25;
- locally heating the section of the head (3) of a horseshoe nail (1) to be hardened;
- quenching the head (3) in water or another fluid.

8. Method according to claim 7 , **characterised in that** heating the head (3) of the horseshoe nail (1) uses induction for heating the head (3) locally.

## Patentansprüche

1. Hufeisennagel (1) zum Annageln eines Hufeisens (6) an einen Huf, wobei der Hufeisennagel (1) einen Schaft (2) enthält, der eine Spitze an einem Ende (4) und einen verbreiterten Kopf (3) an dem anderen Ende umfasst, und wobei der Kopf (3) zumindest über einen Teil seiner Länge (E) von seinem freien Ende aus gehärtet ist, während der Schaft (2) nicht über seine gesamte oder fast gesamte Länge von der Spitze (4) aus gehärtet ist, **dadurch gekennzeichnet, dass** der Hufeisennagel (1) aus Stahl hergestellt ist, der einen Kohlenstoffgewichtsprozentsatz zwischen 0,18 und 0,25 umfasst.

2. Hufeisennagel (1) nach Anspruch 1, **dadurch gekennzeichnet, dass** nur der Kopf (3) bis zu einer Länge (E) von 1,9 mm bis 3,9 mm ab seinem freien Ende gehärtet ist.

3. Hufeisennagel (1) nach einem der vorhergehenden Ansprüche, **dadurch gekennzeichnet, dass** der gehärtete Abschnitt des Kopfes (3) eine Rockwellhärte C von 30 oder mehr, vorzugsweise 40 oder mehr, aufweist.

4. Hufeisennagel (1) nach Anspruch 3, **dadurch gekennzeichnet, dass** der Querschnitt sowohl des Kopfes (3) als auch des Schaftes (2) des Hufeisennagels (1) rechteckig ist, wobei die längsten Seiten beider Querschnitte parallel zueinander sind.

5. Kombination aus Hufeisen (6) und Hufnagel (1), wobei das Hufeisen (6) mit einer oder mehreren Rillen (9), die ein oder mehreren Nagellöchern (12) in dem Boden (11) umfassen, versehen ist, wobei in einem montierten Zustand des Hufeisens (6) unter einem Huf der Nagel (1) mit seinem Kopf (3) teilweise in der Rille (9) versenkt ist, wobei ein Ende aus der Rille (9) herausragt, **dadurch gekennzeichnet, dass** der Hufeisennagel (1) ein Hufeisennagel (1) nach einem der vorhergehenden Ansprüche ist, wobei zumindest der herausragende Abschnitt des Kopfes (3) gehärtet ist.

6. Kombination nach Anspruch 5, **dadurch gekennzeichnet, dass** nur der herausragende Abschnitt des Kopfes (3) gehärtet ist.

7. Verfahren zur Herstellung eines Hufeisennagels (1), der einen gehärteten Kopf (3) umfasst, nach einem der Ansprüche 1 bis 4, wobei das Verfahren die folgenden Schritte umfasst:
- das Bereitstellen eines Hufeisennagels (1) aus Stahl, der einen Kohlenstoffgewichtsprozentsatz zwischen 0,18 und 0,25 umfasst;
- das lokale Erhitzen des zu härtenden Abschnitts des Kopfes (3) eines Hufeisennagels (1);
- das Abschrecken des Kopfes (3) in Wasser oder einer anderen Flüssigkeit.

8. Verfahren nach Anspruch 7, **dadurch gekennzeichnet, dass** die Erwärmung des Kopfes (3) des Hufeisennagels (1) durch Induktion erfolgt, um den Kopf (3) lokal zu erwärmen.

## Revendications

1. Clou de fer à cheval (1) destiné à clouer un fer à cheval (6) à un sabot ; dans lequel le clou de fer à cheval (1) contient une tige (2) qui comprend une pointe à une extrémité (4) et une tête élargie (3) à l'autre extrémité ; et dans lequel la tête (3) est durcie au moins sur une partie de sa longueur (E) à partir de son extrémité libre, tandis que la tige (2) n'est pas durcie sur la totalité ou pratiquement la totalité de sa longueur à partir de la pointe (4), **caractérisé en ce que** le clou de fer à cheval (1) est réalisé à partir d'un acier qui possède un pourcentage de carbone en poids qui se situe entre 0,18 et 0,25.

2. Clou de fer à cheval (1) selon la revendication 1, **caractérisé en ce que** uniquement la tête (3) est durcie jusqu'à une longueur (E) de 1,9 mm à 3,9 mm à partir de son extrémité libre.

3. Clou de fer à cheval (1) selon l'une quelconque des revendications précédentes, **caractérisé en ce que** le tronçon durci de la tête (3) possède une dureté correspondant à une échelle Rockwell C qui s'élève à 30 ou plus, de préférence à 40 ou plus.

4. Clou de fer à cheval (1) selon la revendication 3, **caractérisé en ce que** la section transversale à la fois de la tête (3) et de la tige (2) du clou de fer à cheval (1) est rectangulaire ; dans lequel les grands côtés des deux sections transversales sont parallèles l'un à l'autre.

5. Combinaison d'un fer à cheval (6) et d'un clou de fer à cheval (1) ; dans laquelle le fer à cheval (6) est équipé d'une ou de plusieurs rainures (9) qui comprennent une ou plusieurs perforations (12) pour des clous dans la base (11) ; dans laquelle, à l'état monté du fer à cheval (6) en dessous d'un sabot, le clou (1) est renfoncé en partie avec sa tête (3) dans la rainure (9), une extrémité faisant saillie à partir de la rainure (9) ; **caractérisée en ce que** le clou de fer à cheval (1) est un clou de fer à cheval (1) selon l'une quelconque des revendications précédentes, dont au moins le tronçon faisant saillie par rapport à la tête (3) est durci.

6. Combinaison selon la revendication 5, **caractérisé en ce que** uniquement le tronçon faisant saillie par rapport à la tête (3) est durci.

7. Procédé destiné à la fabrication d'un clou de fer à cheval (1) comportant une tête durcie (3) en conformité avec l'une quelconque des revendications 1 à 4, dans lequel le procédé comprend les étapes suivantes au cours desquelles :
- on procure un clou de fer à cheval (1) qui est réalisé en acier qui possède un pourcentage de carbone en poids qui se situe entre 0,18 et 0,25 ;
on chauffe localement le tronçon de la tête (3) d'un clou de fer à cheval (1) dans le but de le durcir ;
on trempe la tête (3) dans de l'eau ou dans un autre fluide.

8. Procédé selon la revendication 7, **caractérisé en ce que** le chauffage de la tête (3) du clou de fer à cheval (1) fait appel à une induction pour le chauffage localisé de la tête (3).
